# EUROPÄISCHE PATENTSCHRIFT

(11) **EP 2 786 034 B1**
(45) Veröffentlichungstag und Bekanntmachung des Hinweises auf die Patenterteilung: **19.10.2016**
(21) Anmeldenummer: 12809088.3
(22) Anmeldetag: 09.11.2012
(51) Int. Cl.: F16D 21/06

(54) **ANORDNUNG EINER KLEINEN DOPPELKUPPLUNG**
SMALL DUBBLE CLUTCH
AGENCEMENT D'UN PETIT EMBRAYAGE DOUBLE

(30) Priorität: 30.11.2011 DE 102011087408
(43) Veröffentlichungstag der Anmeldung: 08.10.2014
(73) Patentinhaber: Schaeffler Technologies AG & Co. KG, 91074 Herzogenaurach (DE)
(72) Erfinder: LORENZ, Elmar, 77836 Rheinmünster Söllingen (DE)
(86) Internationale Anmeldenummer: PCT/DE2012/001079
(87) Internationale Veröffentlichungsnummer: WO 2013/079045

(56) Entgegenhaltungen:
- EP-A1- 1 826 433
- DE-A1-102007 027 119
- DE-A1-102009 050 998
- DE-A1-102011 014 778

## Beschreibung

Die vorliegende Erfindung betrifft die Anordnung einer Doppelkupplung, insbesondere zur Anbindung einer Abtriebswelle von einer Antriebseinheit mit dem Antriebsstrang eines Kraftfahrzeugs.

Aus dem Stand der Technik sind verschiedene Doppelkupplungen bekannt, die jedoch allesamt den Nachteil aufweisen, einen großen Bauraum einzunehmen und die bezogen auf die Konstruktion und die Fertigung sehr komplex sind.

Aus der DE 38 19 702 A1 ist eine hydraulische betätigte Doppelkupplung für ein Kraftfahrzeugs bekannt, bei der die hydraulische Zuleitung und die hydraulischen Aktuatoren im Kupplungsgehäuse integriert sind. Insgesamt ist die Anlage der hydraulischen Zuleitung sehr komplex.

Aus der DE 10 2008 019 949 A1 ist eine Doppelkupplung bekannt, bei der über zwei Teilkupplungen über Betätigungshebel eine Anpresskraft auf Druckplatten ausgeübt wird. Die Aktuatoren für die Betätigungshebel sind im Innenraum des Gehäuses angeordnet. Der Aktuator des ersten Teilsystems wird über eine die erste Getriebewelle durchdringende Zugstange oder eine in der ersten Getriebewelle innenliegende Hydraulikleitung betätigt. Der gezeigte Aufbau der Patentanmeldung ist sehr komplex.

In der EP 1 361 102 A2 ist eine Kupplungseinheit in einer Kraftfahrzeugübersetzung gezeigt, wobei die Betätigungshebel ebenfalls im Innenraum des Kupplungsgehäuses angeordnet sind. Während die Auslenkung der ersten Teilkupplung mechanisch über eine Zugstange übertragen wird, wird die zweite Teilkupplung über einen hydraulischen Aktuator bewegt. Auch diese Anordnung ist äußerst komplex und benötigt viel Bauraum.

In der DE 102 31 513 A1 ist eine Mehrfachkupplungsanordnung gezeigt, bei der die Teilkupplungssysteme über getrennte Betätigungshebel betätigt werden, wobei diese über einen zentral angeordneten Einrückzylinder betätigt werden. Auch in dieser Anordnung ist das Einrücksystem im Inneren des Kupplungsgehäuses angeordnet und der Betätigungsmechanismus ist sehr komplex.

Aus der DE 35 34 567 A1 ist eine durch Fluiddruck betätigte Reibkupplung bekannt. Hierbei wird lediglich eine Einfachkupplung für eine einzige Getriebewelle gezeigt. Die Kupplungsscheibe ist darin mittig angeordnet und von zwei Anpressplatten umgeben, die beidseitig von hydraulischen Aktuatoren betätigt werden.

Der vorliegenden Erfindung liegt davon ausgehend die Aufgabe zugrunde, die aus dem Stand der Technik bekannten Nachteile zumindest teilweise zu überwinden. Insbesondere soll eine Doppelkupplung angegeben werden, die einfach herstellbar ist und einen geringen Bauraum aufweist.

Die Aufgabe wird gelöst durch die Merkmale des unabhängigen Patentanspruchs. Vorteilhafte Weiterbildungen sind Gegenstand der abhängigen Patentansprüche gerichtet.

In der vorliegenden Erfindung wird eine Anordnung einer Doppelkupplung beschrieben, die
- ein rotierendes mehrteiliges Kupplungsgehäuse, zumindest umfassend eine Mitnahmeeinrichtung und einen Kupplungskorb,
- einen Zentralsteg,
- eine erste und eine zweite Teilkupplung, welche beide den gemeinsamen Zentralsteg nutzen und die jeweils zumindest folgende Komponenten umfassen:
- zumindest eine Kupplungsscheibe mit je zwei Reibflächen,
- eine zur Anzahl der zumindest einen Kupplungsscheibe korrespondierende Anzahl von Anpressplatten,
- eine in einem starren Anbauteil angeordnete Betätigungseinrichtung zur Erzeugung einer Einrückkraft, aufweisend eine Kraftübertragungseinheit zum Wandeln der Einrückkraft in eine Anpresskraft, die die mindestens eine Anpressplatte gegen eine korrespondierende Reibfläche drückt, sodass bei anliegender Kraft die Kupplungsscheibe, die korrespondierende Anpressplatte und die Zentralsteg sich synchron drehen, wobei die Kraftübertragungseinheit einen starren Anteil zugewandt zur Betätigungseinrichtung und einen rotierenden Anteil zugewandt zum Zentralsteg aufweist und wobei der rotierende Anteil einen Drucktopf umfasst,
aufweist. Diese Anordnung einer Doppelkupplung ist dadurch gekennzeichnet, dass zumindest eine der zwei Kraftübertragungseinheiten außerhalb des Kupplungsgehäuses angeordnet ist und der Drucktopf mit zumindest einem Betätigungsfinger verbunden ist, der sich durch das Kupplungsgehäuse hindurch erstreckt und eingerichtet ist, die Anpresskraft auf eine erste Anpressplatte auszuüben.

Das rotierende mehrteilige Kupplungsgehäuse ist insbesondere dazu eingerichtet, eine Befestigung für die Anpressplatten und den Zentralsteg zu bilden. Hierfür sind in dem Kupplungsgehäuse Verbindungsstellen vorgesehen, an denen die Anpressplatten, und ggf. der Zentralsteg, synchron mit dem Gehäuse mitlaufen und zugleich in axialer Richtung verschiebbar bleiben. In einer Ausführungsvariante sind die Anpressplatten durch eine Innenverzahnung des Gehäuses in Drehrichtung fest zum Gehäuse positioniert. Zur Nutzung dieser Verzahnung kann zudem der Zentralsteg genauso wie die Anpressplatten darüber positioniert werden, wobei der Zentralsteg weiterhin über ein Befestigungsmittel, wie zum Beispiel einen Sicherungsring, axial positioniert wird. In allen Fällen sind aber auch andere rein rotatorische Fixierungen über Stifte möglich. Insbesondere kann auch der Zentralsteg durch eine feste Verbindung dauerhaft mit dem Gehäuse fixiert werden, wobei es abhängig von der Anordnung der Verschleißteile sinnvoll sein kann, auch den Zentralsteg herausnehmbar zu positionieren. Dadurch können die Verschleißteile, wie zum Beispiel Anpressplatten, Kupplungsscheiben, Reibbeläge und Lager in wirtschaftlicher Weise austauschbar sein.

In einer bevorzugten Ausführungsform umfasst das Kupplungsgehäuse die Mitnahmeeinrichtung und den Kupplungskorb, wobei der Kupplungskorb die Positioniermittel für die Anpressplatten und den Zentralsteg aufweist. Insbesondere wird der Kupplungskorb so bezeichnet, weil er schalen- beziehungsweise glockenförmig ist und die gesamte Konstruktion bestehend aus dem Lamellen, Anpressplatten, Kupplungsscheiben und Zentralsteg in den Kupplungskorb eingelegt werden können und, sofern erforderlich, durch diesen allein rotatorisch positioniert werden können. Die Mitnahmeeinrichtung schließt insbesondere das Kupplungsgehäuse ab. Je nach Ausrichtung und Ausführung der Krafteinleitmittel kann das Gehäuse zudem dazu ausgebildet sein, die eingeleitete Anpresskraft aufzunehmen und über die Lagerung, insbesondere Wälzlager in die feste Umbauung einzuleiten.

Der Zentralsteg ist so wie die Anpressplatten in dem rotierenden Kupplungsgehäuse fixiert. Im Unterschied zu den Anpressplatten ist aber der Zentralsteg dazu eingerichtet, das Drehmoment sowohl die erste Teilkupplung als auch die zweite Teilkupplung auf die erste beziehungsweise die zweite Getriebewelle zu übertragen. In einem weiteren Unterschied zu den Anpressplatten hat der Zentralsteg die weitere Aufgabe, die Anpresskraft aufzunehmen und direkt oder mittelbar in das Gehäuse beziehungsweise die umbauenden nicht rotierenden Teile einzuleiten.

Die erste und zweite Teilkupplung können gleichartig aufgebaut sein, können aber auch unterschiedliche Größen, Anzahlen und Durchmesser an Kupplungsscheiben und Anpressplatten aufweisen. Insbesondere ist es für die meisten Anwendungen sinnvoll, dass beide Teilkupplungen in der Lage sind, das gleiche Drehmoment zu übertragen. Es kann aber auch sinnvoll sein, eine angepasste Drehmomentübertragung für die jeweilige angeschlossene Getriebewelle zu erreichen. Die Teilkupplungen sind jeweils zu einer Seite des Zentralstegs angeordnet, so dass beim Anliegen einer Teilkupplung der Zentralsteg zusammen mit den Kupplungsscheiben und den Anpressplatten nach Sandwichart reibschlüssig das Drehmoment der angeschlossenen Antriebswelle auf die jeweilige Getriebewelle zu übertragen. Die jeweilige Teilkupplung umfasst zumindest eine Kupplungsscheibe mit je zwei Reibflächen. Die Kupplungsscheiben sind ebenfalls axial verschiebbar mit einer Getriebewelle verbunden. Im Überschneidungsbereich mit den Anpressplatten weisen die Kupplungsscheiben beidseitig Reibflächen auf, welche die Reibung mit den Anpressplatten möglichst genau definieren. Die radiale Lage, Fläche und Materialdicke der Reibflächen ist dem zu übertragenden Drehmoment gemäß ausgelegt. Hierbei kann es notwendig sein, um die radiale Ausdehnung der Kupplung gering zu halten, mehrere kleine Kupplungsscheiben vorzusehen oder eine geringe Anzahl beziehungsweise nur eine mit einer großen radialen Ausdehnung, wodurch die axiale Länge der Kupplung deutlich geringer wird. Entsprechend wird die Anzahl der Anpressplatten gewählt, das heißt in der Regel eine Anpressplatte pro Kupplungsscheibe. Somit sind die Kupplungsscheiben zu je beiden Seiten benachbart zu einer Anpressplatte und/oder zu dem Zentralsteg angeordnet. Um die Teilkupplungen beziehungsweise eine Teilkupplung in Eingriff zu bringen und so das Drehmoment der Antriebswelle auf eine der Getriebewellen zu übertragen, müssen die Anpressplatten, die Kupplungsscheiben und der Zentralsteg mit einer Anpresskraft zusammengedrückt werden. Durch die Reibung zwischen den einzelnen Lamellen kann zusammen mit der Anpresskraft das anliegende Drehmoment von dem Zentralsteg und den Anpressplatten auf die Kupplungsscheiben übertragen werden.

Zur Betätigung einer Teilkupplung wird eine Einrückkraft über eine Betätigungseinrichtung bereitgestellt. Diese Einrückkraft stellt die Betätigungskraft dar, die von dem Verwender direkt oder indirekt aufgebracht werden muss. Weil Doppelkupplungen in der Regel automatisch betrieben werden müssen, kann die Einrückkraft häufig der Anpresskraft entsprechen, so dass die Kraftübertragungseinheit die Kraft mit einem Faktor 1 überträgt. Zur Schonung der Lager beziehungsweise zur Verwendung von Betätigungseinrichtungen mit geringer Kraft wird aber häufig eine Kraftübertragungseinheit mit einem Faktor größer 1 eingesetzt. Eine solche Kraftübertragungseinheit ist in den meisten Fällen ein Hebel, welcher zwischen der Betätigungseinrichtung und dem Drucktopf angeordnet ist und die eingeleitete Kraft vergrößert. Mitunter sind in der Kraftübertragungseinheit weiterhin Vorrichtungen vorgesehen, die einen Ausgleich des Verschleißes der Reibflächen ermöglichen, oder sich selbst nachjustieren. Auch sind in der Kraftübertragungseinheit Sensoren zur Ermittlung der Anpresskraft angeordnet, so dass sichergestellt ist, dass die notwendige Mindestanpresskraft anliegt und das Drehmoment sicher übertragen werden kann. In den meisten Fällen ist die Betätigungseinrichtung im starren Gehäuse angeordnet, wodurch die Komplexität der Betätigungseinrichtung gering gehalten werden kann. Dem Kraftübertrager kommt zudem die Aufgabe zu, mittels einer Lagerung, in der Regel eine Wälzlagerung, die aus der starren Komponente eingebrachte Einrückkraft in den rotierenden Drucktopf zu übertragen. Die durch die Kraftübertragungseinheit in eine Anpresskraft umgewandelte Einrückkraft sorgt beim Einrücken des Drucktopfs dafür, dass die relative Geschwindigkeit zwischen der Kupplungsscheibe und den Anpressplatten beziehungsweise dem Zentralsteg in ausreichend sanfter Weise reduziert wird. Ist die relative Geschwindigkeit Null, so wird das anliegende Drehmoment voll übertragen. In diesem Fall drehen sich die Kupplungsscheibe und die korrespondierende Anpressplatte, als auch der Zentralsteg synchron.

Erfindungsgemäß ist zumindest eine der zwei Kraftübertragungseinheiten außerhalb des rotierenden Kupplungsgehäuses angeordnet. Dies hat den Vorteil, dass dieses Bauteil von außen gut zugänglich angeordnet ist. Darüber hinaus wird die Konstruktion des Kupplungsgehäuses vereinfacht, weil die Kraftübertragungseinheit nicht in das Kupplungsgehäuse integriert werden muss. Zum Erreichen der Anpressplatten durch den Drucktopf ist der Drucktopf mit zumindest einem Betätigungsfinger verbunden, welcher sich durch da Kupplungsgehäuse hindurch erstreckt und eingerichtet ist, die Anpresskraft auf eine erste Anpressplatte auszuüben. Dabei kann der Betätigungsfinger ein zusätzliches Bauteil und/oder einstückig mit dem Drucktopf gebildet sein. Der Betätigungsfinger kann kraftschlüssig (zum Beispiel verschraubt), formschlüssig (zum Beispiel wie Feder und Nut) oder stoffschlüssig (zum Beispiel geklebt, gelötet oder geschweißt) mit dem Drucktopf verbunden sein. Hierbei ist der Betätigungsfinger so eingerichtet, dass die Anpresskraft möglichst gleichmäßig auf die Anpressplatte übertragen wird, das heißt möglichst kein Kippmoment auf die Anpressplatte übertragen wird. Bei großen Anpressplatten ist es daher vorteilhaft, mehrere Betätigungsfinger beabstandet voneinander vorzusehen.

In einer weiteren vorteilhaften Ausführungsform der Anordnung ist zumindest eine der folgenden Komponenten durch eine Mitnahmeverzahnung mit dem Kupplungsgehäuse synchronisiert:
- Zentralsteg,
- eine Hebelfeder der ersten und/oder zweiten Kraftübertragungseinheit,
- zumindest eine der ersten oder zweiten Anpressplatten,
wobei insbesondere der Kupplungskorb die Mitnahmeverzahnung umfasst, und besonders bevorzugt der Kupplungskorb einen Anschlag für den Zentralsteg am Außendurchmesser des Zentralstegs bildet.

Durch die vorgeschlagene Anordnung wird es möglich, das Drehmoment der Antriebswelle über das Kupplungsgehäuse von außen nach innen zur Getriebewelle zu übertragen. Durch die Doppelfunktion des Kupplungsgehäuses sowohl als Aufnahme und Schutzhülle für die rotierenden Bestandteile als auch als Drehmomentübertragungskomponente wird eine sehr einfache Konstruktion erreicht. Insbesondere die Hebefeder zur Steigerung der Einrückkraft in eine größere Anpresskraft kann in dem Kupplungsgehäuse gelagert werden. Insgesamt wird durch diese Anordnung die Anzahl der Bauteile deutlich reduziert und die Gesamtbaugröße gering gehalten. Besonders bevorzugt ist dabei, dass die Mitnahmeverzahnung im Kupplungskorb des Kupplungsgehäuses vorgesehen sind, so dass ein und dieselbe Verzahnung für alle rotierenden Bauteile, die ständig mit der Antriebswelle synchronisiert laufen müssen, verwendet werden kann.

In einer noch weiter bevorzugten Ausführungsform ist der Kupplungskorb gestuft und bildet so einen Anschlag für den Zentralsteg, welcher im Gegensatz zu den Anpressplatten axial fixiert werden muss. Dadurch wird eine aufwendige zusätzliche Befestigung des Zentralstegs überflüssig. Die Gesamtbaugröße der vorgeschlagenen Kupplung ist daher besonders gering.

In einer weiteren vorteilhaften Ausführungsform der Anordnung ist der Durchmesser der ersten Kupplungsscheibe kleiner als der Durchmesser der zweiten Kupplungsscheibe.

Hierdurch wird mittels der unterschiedlichen möglichen Durchmesser eine sehr variable Anpassung an die gegebenen Platzverhältnisse der jeweiligen Bausituation möglich.

In einer weiteren vorteilhaften Ausführungsform der Anordnung unterscheidet sich die Anzahl der Kupplungsscheiben der ersten Teilkupplung von der Anzahl der Kupplungsscheiben der zweiten Teilkupplung, wobei bevorzugt ein durch die Teilkupplungen übertragbares Moment gleich ist.

Wegen der Anpassung an den Bauraum, vor allem in axialer Länge, und/oder Anpassung an verschiedene Drehmomentcharakteristiken können die Anzahl der Kupplungsscheiben in den Teilkupplungen unterschiedlich gewählt sein. Für die meisten Anwendungen ist es aber sinnvoll, über beide Teilkupplungen ein gleichartiges Drehmoment übertragen zu können und bevorzugt eine gleichartige Drehmomentdynamik beim Einrückvorgang zu erreichen. Daher können die Anzahlen und Lagen der Reibflächen so ausgelegt werden, dass sie trotz unterschiedlicher Anzahl von Kupplungsscheiben ein gleichartiges Übertragungsverhalten aufweisen.

In einer weiteren vorteilhaften Ausführungsform der Anordnung wird die auf den Zentralsteg eingeleitete Anpresskraft über eine rotierende Lagerung in zumindest ein starres Anbauteil der Anordnung übertragen, wobei die rotierende Lagerung auf einem zu den Reibflächen konzentrischen Kreis angeordnet ist, der einen Durchmesser aufweist, der kleiner als ein innerster Durchmesser einer der Reibflächen ist, wobei besonders bevorzugt zumindest ein starres Anbauteil eine der Betätigungseinrichtungen ist.

In einer solchen Anordnung wird bereits das Drehmoment über das Kupplungsgehäuse auf den Zentralsteg und die Anpressplatten von außen zu den Reibflächen hin übertragen. Daher ist es vorteilhaft, das Gehäuse nicht weiter durch das Aufnehmen der Anpresskraft zu belasten. Dies hat den Vorteil, dass das Kupplungsgehäuse weniger stabil ausgelegt sein kann und eine einfache Aufnahmebefestigung für den Zentralsteg vorgesehen werden kann. Dadurch, dass das Kupplungsgehäuse in dieser Ausführungsform weniger stabil ausgelegt werden muss, wird die Masse des Kupplungsgehäuses gering gehalten. Weil das Kupplungsgehäuse gemäß einer bevorzugten Ausführungsform das äußerstes Bauteil der rotierenden Einheit der Anordnung einer Doppelkupplung darstellt, wird neben der statischen Masse auch die rotationsträge Masse reduziert.

In einer weiter bevorzugten Ausführungsform ist das starre Anbauteil, welches die eingeleitete Anpresskraft aus dem Zentralsteg über die rotierende Lagerung im Innendurchmesser des Zentralstegs aufnimmt, eine der Betätigungseinrichtungen für die Einrückkraft.

Hierdurch die Kraftleitung an den Ursprungsort zurückgeführt und eine geschlossene Kraftklammer ausgebildet, die zudem besonders klein ist und somit über nur eine geringe Anzahl an Zwischenbauteilen geleitet werden muss. Die rotierende Lagerung wird bevorzugt über Axialzylinderlager vom Zentralsteg über den Anschluss der Kupplungsscheiben an die Getriebewelle in die festen Anbauteile übertragen.

In einer weiteren vorteilhaften Ausführungsform der Anordnung ist der Kupplungskorb im Wesentlichen glockenförmig, vorzugsweise stufenförmig und die Mitnahmeeinrichtung im Wesentlichen flach.

Die Glockenform erlaubt für viele Anwendungen eine bauraumsparsame Anordnung, wobei die meist axial unkritische Baulänge ausgenutzt wird und die radial maximale Ausdehnung nur auf einen kleinen Bereich beschränkt ist. Insbesondere kann die Glockenform gestuft sein, um somit Anschlagsflächen und Montageflächen für die innenliegenden Bauteile zu gewähren. Zur einfachen Ausbildung der Mitnahmeeinrichtung ist dieser flach ausgelegt. Hierbei können durch Anschlussstellen und Anbauteile Unebenheiten und Knicke vorgesehen sein, im Ganzen bleibt die Kupplung jedoch flach. Insgesamt wird die Anzahl an notwendigen Teilen reduziert und die Fertigung der Doppelkupplung vereinfacht.

In einer weiteren vorteilhaften Ausführungsform ist die Anordnung nass ausgeführt.

Durch die nasse Anordnung ist es möglich, einen höheren Wärmeaustausch insbesondere der reibbelasteten Bauteile Zentralsteg, Anpressplatte und Kupplungsscheiben zu erreichen. Hierdurch wird die erforderliche thermische Masse, also die Größe und Masse der wärmebelasteten Bauteile, verringert. Insgesamt wird dadurch die Baugröße der Doppelkupplung verringert. In dieser speziellen Ausführungsform ist der Drucktopf außerhalb des Gehäuses angeordnet, welches den Nassraum umgrenzt, und lediglich der Betätigungsfinger ragt in das Gehäuse. Hierdurch ergibt sich der Vorteil, dass das weniger wärmebelastete Bauteil der Kraftübertragungseinheit und des Drucktopfs nicht in der kühlenden Flüssigkeit bewegt werden muss, sondern in dem weniger reibungsbehafteten und weniger trägen freien Raum bewegt werden kann, der mit einem Gas, insbesondere Luft, gefüllt ist. Dieses Gas ist ausreichend für den Drucktopf, um eine notwendige Kühlung bereitzustellen. Insgesamt wird dadurch die Baugröße und Komplexität der Konstruktion wesentlich verringert. Der Drucktopf muss nicht von einem teilweise rotierenden Gehäuse umgeben sein, sondern kann selbst das äußerste rotierende Bauteil darstellen, wodurch der zur Verfügung stehende Bauraum vergrößert wird, beziehungsweise bei gleicher Baugröße ein geringerer Bauraum benötigt wird. Der Raum außerhalb des Kupplungsgehäuses muss nicht vollkommen trocken sein, wie dies bei einer trockenen Ausführung der Fall ist, jedoch weist sie keine vollständige Füllung mit der Kühlflüssigkeit auf.

In einer weiteren vorteilhaften Ausführungsform der Anordnung ist diese außerhalb des Kupplungsgehäuses trocken und die Kraftübertragungseinheit ist ebenfalls trocken.

In einer weiteren vorteilhaften Ausführungsform der Anordnung wird die Betätigungseinrichtung hydraulisch betrieben. Durch die Wahl einer hydraulischen Betätigungseinrichtung wird die übertragbare Kraft als zur Verfügung stehende Einrückkraft gegenüber anderen Systemen erhöht. Dies hat unter anderem den Vorteil, dass der Stellweg insgesamt verkürzt wird, weil keine oder nur eine kleine Kraftvergrößerung durch eine Hebelfeder in der Kraftübertragungseinheit zur Erzeugung der notwendigen Anpresskraft benötigt wird. Dies hat zur Folge, dass die Stellwege sowohl an der Betätigungseinrichtung selbst als auch an dem Drucktopf beziehungsweise Betätigungsfinger nicht größer als notwendig sein muss und die Anpassung an den Verschleiß der Reibflächen erleichtert wird, denn mit der Zunahme des Verschleißes wird die mögliche Einrückweglänge vergrößert und es ist daher wünschenswert für Kupplungen kleiner Baugröße einen für die Gesamtlebensdauer der Kupplung ausgelegten Einrückweg von besonders kurzer Länge zu ermöglichen.

Im Rahmen der Erfindung ist auch ein Kraftfahrzeug beschrieben, welches eine Antriebseinheit mit Abtriebswelle, einen Antriebsstrang und eine Anordnung einer Doppelkupplung nach obiger Beschreibung aufweist, wobei die Anordnung die Abtriebswelle mit dem Antriebsstrang lösbar verbindet und die Antriebseinheit insbesondere im Kraftfahrzeug vor der Fahrerkabine und quer zur Längsachse des Kraftfahrzeugs ausgerichtet ist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist bei einer solchen Anordnung besonders gering und es ist daher besonders vorteilhaft, eine Anordnung einer Doppelkupplung nach obiger Beschreibung zu verwenden, weil diese einen besonders geringen Bauraum einnimmt.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Lamelle beziehungsweise die Doppelkupplung ist aufgrund ihrer besonders kleinen Baugröße besonders geeignet. Personenkraftwagen werden einer Fahrzeugklasse nach zum Beispiel Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beziehungsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Die Figuren sind schematisch und benennen gleiche Bauteile mit gleichen Bezugszeichen. Es zeigen schematisch und exemplarisch:
- Fig. 1:: eine beispielhafte Anordnung einer Doppelkupplung im Querschnitt; und
- Fig. 2:: ein Kraftfahrzeug mit der Anordnung einer Doppelkupplung.

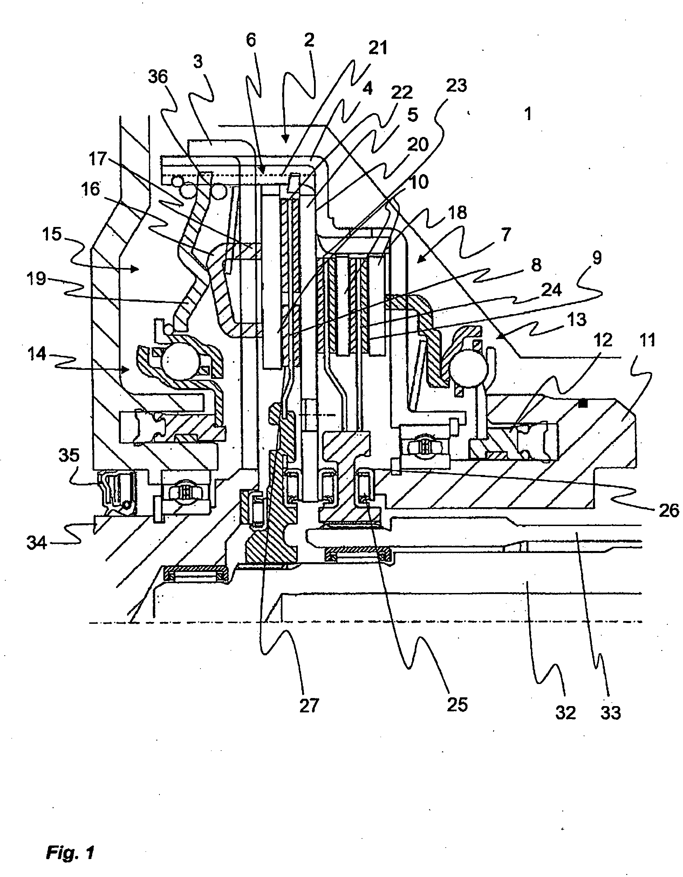

Fig. 1 zeigt eine Anordnung 1 einer Doppelkupplung mit einem Zentralsteg 5, einer ersten Teilkupplung 6 und einer zweiten Teilkupplung 7. Der Zentralsteg 5 und die zwei Teilkupplungen 6, 7 sind in einem Kupplungsgehäuse 2 mit einer Mitnahmeeinrichtung 3 und einem Kupplungskorb 4 angeordnet. Das Kupplungsgehäuse 2 ist fest mit dem Abtriebswellenan-schluss 34 verbunden und rotiert daher. Über die Mitnahmeverzahnung 18 werden der Zentralsteg 5 und die Anpressplatten 10 mitgenommen und übertragen das Drehmoment ausgehend von dem Abtriebswellenanschluss 34, wenn die Anpressplatten 10 gegen die Kupplungsscheiben 8 beziehungsweise 24 gepresst werden. Zum Beispiel die Kupplungsscheibe 24 weist eine Reibfläche 9 auf. Auch die erste Kupplungsscheibe 8 weist auf der linken und rechten Seite eine Reibfläche auf. Die Anpressplatten 10 werden über die Kraftübertragungseinheit 13 mit dem Drucktopf 16 angepresst Die Kraftübertragungseinheit 13 wird eingangsseitig von der Betätigungseinrichtung 12 angetrieben, der in einem starren Anbauteil 11, das heißt einem nicht rotierenden Anbauteil, angeordnet ist. Die Kraftübertragungseinheit 13 besteht aus einem starren Anteil 14 und einem rotierenden Anteil 15. Der rotierende Anteil 15 umfasst den Drucktopf 16, welcher mit dem Betätigungsfinger 17 verbunden ist und gegebenenfalls eine Hebelfeder 19. Auch die Hebelfeder der ersten Teilkupplung 6 wird über die Mitnahmeverzahnung 18 im Hebelfedergegenlager 36 gehalten. Der gezeigte Kupplungskorb 4 ist glockenförmig beziehungsweise stufenförmig ausgebildet und weist einen Anschlag 20 für den Zentralsteg 5 auf, so dass dieser axial fixiert ist. Die Mitnahmeverzahnung 18 ist am Außendurchmesser 21 des Zentralstegs 5 beziehungsweise der Anpressplatten 10 gebildet, so dass diese in die Mitnahmeverzahnung 18 eingreifen. Die erste Kupplungsscheibe 8 weist einen ersten Durchmesser 22 auf und die zweite Kupplungsscheibe 24 einen zweiten Durchmesser 23, welcher kleiner ist als der erste Durchmesser 22. Die Übertragung der Anpresskraft auf die Anpressplatten 10 muss in ein Anbauteil umgeleitet werden. Dazu ist im vorliegenden Fall der Zentralsteg 5 eingerichtet. Die durch den Drucktopf auf die Anpressplatten 10 übertragene Anpresskraft wird von dem Zentralsteg 5 aufgenommen und über die zentral angeordnete rotierende Lagerung 25 in das feste Anbauteil 11 übertragen. Die rotierende Lagerung ist auf einem Durchmesser 26 angeordnet, der kleiner ist als der innerste Durchmesser 27 einer der Reibflächen 9 der Kupplungsscheiben 8, 24. Weiterhin sind in Fig. 1 die erste Getriebewelle 32, welche mit der ersten Teilkupplung 6 verbunden ist, und die zweite Getriebewelle 33, welche mit der zweiten Teilkupplung 7 verbunden ist, gezeigt. Auf der linken Seite beim Abtriebswellenanschluss 34 ist ein Radialwellendichtring 35 gezeigt. Dieser ist dazu eingerichtet, die Teilkupplung nach außen hin abzudichten.

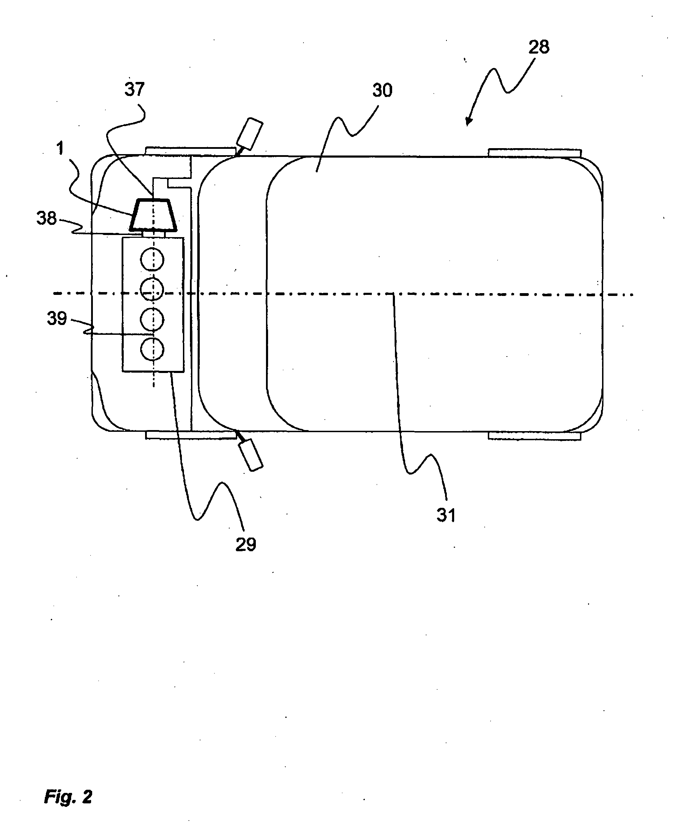

Fig. 2 zeigt ein Kraftfahrzeug 28, welches beispielhaft als ein Kraftfahrzeug 28 der Kleinwagenklasse mit Frontantrieb dargestellt ist. Im Bereich vor der Fahrerkabine 30 ist eine Antriebseinheit 29 gezeigt, deren Abtriebswelle 38 über den nicht dargestellten Abtriebswellenanschluss 34 mit der Anordnung 1 der Doppelkupplung verbunden ist. Die Achse 39 der Antriebseinheit 29 ist quer zur Längsachse 31 des Kraftfahrzeugs 28 ausgerichtet. An der der Antriebseinheit 29 gegenüberliegenden Seite der Anordnung 1 der Doppelkupplung ist ein Antriebsstrang 37 lediglich schematisch angedeutet.

Es wird eine Anordnung einer Doppelkupplung gezeigt, die eine geringe Komplexität aufweist, wenig Bauraum benötigt und deren Verlustleistung durch die trockene Anordnung der Kraftübertragungseinheit reduziert werden kann.

### Bezugszeichenliste

- 1: Anordnung
- 2: Kupplungsgehäuse
- 3: Mitnahmeeinrichtung
- 4: Kupplungskorb
- 5: Zentralsteg
- 6: erste Teilkupplung
- 7: zweite Teilkupplung
- 8: erste Kupplungsscheibe
- 9: Reibfläche
- 10: Anpressplatte
- 11: starres Anbauteil
- 12: Betätigungseinrichtung
- 13: Kraftübertragungseinheit
- 14: starrer Anteil
- 15: rotierender Anteil
- 16: Drucktopf
- 17: Betätigungsfinger
- 18: Mitnahmeverzahnung
- 19: Hebelfeder
- 20: Anschlag
- 21: Außendurchmesser
- 22: erster Durchmesser
- 23: zweiter Durchmesser
- 24: Kupplungsscheibe
- 25: rotierende Lagerung
- 26: Durchmesser
- 27: innerster Durchmesser
- 28: Kraftfahrzeug
- 29: Antriebseinheit
- 30: Fahrerkabine
- 31: Längsachse
- 32: erste Getriebewelle
- 33: zweite Getriebewelle
- 34: Abtriebswellenanschluss
- 35: Radialwellendichtring
- 36: Hebelfedergegenlager
- 37: Antriebsstrang
- 38: Abtriebswelle
- 39: Achse

## Patentansprüche

1. Anordnung (1) einer Doppelkupplung, aufweisend
- ein rotierendes mehrteiliges Kupplungsgehäuse (2), zumindest umfassend eine Mitnahmeeinrichtung (3) und einen Kupplungskorb (4),
- einen Zentralsteg (5),
- eine erste Teilkupplung (6) und eine zweite Teilkupplung (7), welche jeweils auf den gemeinsamen Zentralsteg (5) wirken und die jeweils zumindest folgende Komponenten umfassen:
- zumindest eine Kupplungsscheibe (8, 24) mit je zwei Reibflächen (9),
- eine zur Anzahl der zumindest einen Kupplungsscheibe (8, 25) korrespondierende Anzahl von Anpressplatten (10),
- eine in einem starren Anbauteil (11) angeordnete Betätigungseinrichtung (12) zur Erzeugung einer Einrückkraft, aufweisend eine Kraftübertragungseinheit (13) zum Wandeln der Einrückkraft in eine Anpresskraft, die die mindestens eine Anpressplatte (10) gegen eine korrespondierende Reibfläche (9) drückt, sodass bei anliegender Kraft die Kupplungsscheibe (8, 24) und die korrespondierende Anpressplatte (10) sich synchron drehen, wobei die Kraftübertragungseinheit (13) einen starren Anteil (14) zugewandt zur Betätigungseinrichtung (12) und einen rotierenden Anteil (15) zugewandt zum Zentralsteg (5) aufweist und wobei der rotierende Anteil (15) einen Drucktopf (16) umfasst,
**dadurch gekennzeichnet, dass**
zumindest eine der zwei Kraftübertragungseinheiten (13) außerhalb des Kupplungsgehäuses (2) angeordnet ist und der Drucktopf (16) mit zumindest einem Betätigungsfinger (17) verbunden ist, der sich durch das Kupplungsgehäuse (2) hindurch erstreckt und eingerichtet ist, die Anpresskraft auf eine erste Anpressplatte (10) auszuüben.

2. Anordnung (1) nach Anspruch 1, wobei zumindest eine der folgenden Komponenten durch eine Mitnahmeverzahnung (18) in dem Kupplungsgehäuse (2) synchronisiert ist:
- Zentralsteg (5),
- eine Hebelfeder (19) der ersten und/oder zweiten Kraftübertragungseinheit (13),
- zumindest eine der ersten oder eine der zweiten Anpressplatten (10),
wobei insbesondere der Kupplungskorb (4) die Mitnahmeverzahnung (18) umfasst, und besonders bevorzugt der Kupplungskorb (4) einen Anschlag (20) für den Zentralsteg (5) am Außendurchmesser (21) des Zentralstegs (5) bildet.

3. Anordnung (1) nach Anspruch 1 oder 2, wobei ein erster Durchmesser (22) der ersten Kupplungsscheibe (8) kleiner als ein zweiter Durchmesser (23) der zweiten Kupplungsscheibe (24) ist.

4. Anordnung (1) nach einem der vorhergehenden Ansprüche, wobei die Anzahl der Kupplungsscheiben (8) der ersten Teilkupplung (6) sich von der Anzahl der Kupplungsscheiben (24) der zweiten Teilkupplung (7) unterscheidet, wobei ein durch die Teilkupplungen (6, 7) übertragbares Moment gleich ist.

5. Anordnung (1) nach einem der vorhergehenden Ansprüche, wobei die auf den Zentralsteg (5) eingeleitete Anpresskraft über eine rotierende Lagerung (25) in zumindest ein starres Anbauteil (11) der Anordnung (1) übertragen wird, wobei die rotierende Lagerung (25) auf einem zu den Reibflächen (9) konzentrischen Kreis angeordnet ist, der einen Durchmesser (26) aufweist, der kleiner als ein innerster Durchmesser (27) einer der Reibflächen (9) ist, wobei zumindest ein starres Anbauteil (11) eine der Betätigungseinrichtungen (12) ist.

6. Anordnung (1) nach einem der vorhergehenden Ansprüche, wobei der Kupplungskorb (4) im Wesentlichen glockenförmig, vorzugsweise stufenförmig, ist und die Mitnahmeeinrichtung (3) im Wesentlichen flach ist.

7. Anordnung (1) nach einem der vorhergehenden Ansprüche, wobei die Anordnung (1) nass ausgeführt ist.

8. Anordnung (1) nach einem der vorhergehenden Ansprüche, wobei die Anordnung (1) außerhalb des Kupplungsgehäuses (2) trocken ist und die außerhalb des Kupplungsgehäuses (2) angeordnete Kraftübertragungseinheit (13) trocken ist.

9. Anordnung (1) nach einem der vorhergehenden Ansprüche, wobei die Betätigungseinrichtung (12) hydraulisch betrieben wird.

10. Kraftfahrzeug (28) aufweisend eine Antriebseinheit (29) mit Abtriebswelle (38), einen Antriebsstrang (37) und eine Anordnung (1) einer Doppelkupplung nach einem der vorhergehenden Ansprüche, wobei die Anordnung (1) die Abtriebswelle (38) mit dem Antriebsstrang (37) lösbar verbindet und die Antriebseinheit (29) insbesondere im Kraftfahrzeug (28) vor der Fahrerkabine (30) und quer zur Längsachse (31) des Kraftfahrzeugs (28) ausgerichtet ist.

## Claims

1. Arrangement (1) of a double clutch, having
- a rotating multiple-piece clutch housing (2), at least comprising a driving device (3) and a clutch basket (4),
- a central web (5),
- a first component clutch (6) and a second component clutch (7) which act in each case on the common central web (5) and comprise in each case at least the following components:
- at least one clutch plate (8, 24) with in each case two friction faces (9),
- a number of pressure plates (10) which corresponds to the number of the at least one clutch plate (8, 25),
- an actuating device (12) which is arranged in a rigid attachment part (11) for generating an engaging force, having a force transmission unit (13) for converting the engaging force into a pressing force which presses the at least one pressure plate (10) against a corresponding friction face (9), with the result that, if a force is prevailing, the clutch plate (8, 24) and the corresponding pressure plate (10) rotate synchronously, the force transmission unit (13) having a rigid part (14) facing the actuating device (12) and a rotating part (15) facing the central web (5), and the rotating part (15) comprising a pressure pot (16),
**characterized in that** at least one of the two force transmission units (13) is arranged outside the clutch housing (2) and the pressure pot (16) is connected to at least one actuating finger (17) which extends through the clutch housing (2) and is set up to exert the pressing force on a first pressure plate (10).

2. Arrangement (1) according to Claim 1, at least one of the following components being synchronized by way of a driving toothing system (18) in the clutch housing (2) :
- central web (5),
- a lever spring (19) of the first and/or second force transmission unit (13),
- at least one of the first or one of the second pressure plates (10),
the clutch basket (4), in particular, comprising the driving toothing system (18), and the clutch basket (4) particularly preferably forming a stop (20) for the central web (5) on the external diameter (21) of the central web (5).

3. Arrangement (1) according to Claim 1 or 2, a first diameter (22) of the first clutch plate (8) being smaller than a second diameter (23) of the second clutch plate (24).

4. Arrangement (1) according to one of the preceding claims, the number of clutch plates (8) of the first component clutch (6) differing from the number of clutch plates (24) of the second component clutch (7), a torque which can be transmitted by way of the component clutches (6, 7) being identical.

5. Arrangement (1) according to one of the preceding claims, the pressing force which is introduced onto the central web (5) being transmitted via a rotating bearing (25) into at least one rigid attachment part (11) of the arrangement (1), the rotating bearing (25) being arranged on a circle which is concentric with respect to the friction faces (9) and has a diameter (26) which is smaller than an innermost diameter (27) of one of the friction faces (9), at least one rigid attachment part (11) being one of the actuating devices (12).

6. Arrangement (1) according to one of the preceding claims, the clutch basket (4) being substantially bell-shaped, preferably step-shaped, and the driving device (3) being substantially flat.

7. Arrangement (1) according to one of the preceding claims, the arrangement (1) being of wet configuration.

8. Arrangement (1) according to one of the preceding claims, the arrangement (1) outside the clutch housing (2) being dry, and the force transmission unit (13) which is arranged outside the clutch housing (2) being dry.

9. Arrangement (1) according to one of the preceding claims, the actuating device (12) being operated hydraulically.

10. Motor vehicle (28) having a drive unit (29) with an output shaft (38), a drive train (37) and an arrangement (1) of a double clutch according to one of the preceding claims, the arrangement (1) releasably connecting the output shaft (38) to the drive train (37), and the drive unit (29) being oriented, in particular, in the motor vehicle (28) in front of the driver's cab (30) and transversely with respect to the longitudinal axis (31) of the motor vehicle (28).

## Revendications

1. Agencement (1) d'un double embrayage, présentant :
- un carter d'embrayage rotatif en plusieurs parties (2) comprenant au moins un dispositif d'entraînement (3) et une cloche d'embrayage (4),
- une cloison centrale (5),
- un premier embrayage partiel (6) et un deuxième embrayage partiel (7) qui agissent chacun sur la cloison centrale commune (5) et qui comprennent chacun au moins les composants suivants :
- au moins un disque d'embrayage (8, 24) avec à chaque fois deux surfaces de friction (9),
- un nombre de plaques de pressage (10) correspondant au nombre des au moins un disques d'embrayage (8, 25),
- un dispositif d'actionnement (12) disposé dans une pièce rapportée rigide (11) pour produire une force d'embrayage, présentant une unité de transfert de force (13) pour convertir la force d'embrayage en une force de pressage qui presse l'au moins une plaque de pressage (10) contre une surface de friction correspondante (9) de sorte que lorsque la force est appliquée, le disque d'embrayage (8, 24) et la plaque de pressage correspondante (10) tournent de manière synchronisée, l'unité de transfert de force (13) présentant une partie rigide (14) tournée vers le dispositif d'actionnement (12) et une partie rotative (15) tournée vers la cloison centrale (5) et la partie rotative (15) présentant un pot de pression (16),
**caractérisé en ce**
**qu'**au moins l'une des deux unités de transfert de force (13) est disposée à l'extérieur du carter d'embrayage (2) et le pot de pression (16) est connecté à au moins un doigt d'actionnement (17) qui s'étend à travers le carter d'embrayage (2) et qui est prévu pour exercer la force de pressage sur une première plaque de pressage (10).

2. Agencement (1) selon la revendication 1, dans lequel au moins l'un des composants suivants est synchronisme dans le carter d'embrayage (2) par une denture d'entraînement (18) :
- la cloison centrale (5),
- un ressort de levier (19) de la première et/ou de la deuxième unité de transfert de force (13),
- au moins l'une des premières ou l'une des deuxièmes plaques de pressage (10),
- la crèche d'embrayage (4) comprenant notamment la denture d'entraînement (18) et particulièrement préférablement la cloche d'embrayage (4) formant une butée (20) pour la cloison centrale (5) au niveau du diamètre extérieur (21) de la cloison centrale (5).

3. Agencement (1) selon la revendication 1 ou 2, dans lequel un premier diamètre (22) du premier disque d'embrayage (8) est inférieur à un deuxième diamètre (23) du deuxième disque d'embrayage (24).

4. Agencement (1) selon l'une quelconque des revendications précédentes, dans lequel le nombre de disques d'embrayage (8) du premier embrayage partiel (6) est différent du nombre des disques d'embrayage (24) du deuxième embrayage partiel (7), un couple pouvant être transmis par les couples l'embrayage (6, 7) étant identique.

5. Agencement (1) selon l'une quelconque des revendications précédentes, dans lequel la force de pressage appliquée sur la cloison centrale (5) est transmise par le biais d'un palier rotatif (25) dans au moins une pièce rapportée rigide (11) de l'agencement (1), le palier rotatif (25) étant disposé sur un cercle concentrique aux surfaces de friction (9), lequel présente un diamètre (26) inférieur à un diamètre le plus intérieur (27) de l'une des surfaces de friction (9), au moins une pièce rapportée rigide (11) étant l'un des dispositifs d'actionnement (12).

6. Agencement (1) selon l'une quelconque des revendications précédentes, dans lequel la cloche d'embrayage (4) est essentiellement en forme de cloche, de préférence de forme étagée et le dispositif d'entraînement (3) est essentiellement plat.

7. Agencement (1) selon l'une quelconque des revendications précédentes, dans lequel l'agencement (1) est réalisé sous forme humide.

8. Agencement (1) selon l'une quelconque des revendications précédentes, dans lequel l'agencement (1) est sec à l'extérieur du carter d'embrayage (2) et l'unité de transfert de force (13) disposée à l'extérieur du carter d'embrayage (2) est sèche.

9. Agencement (1) selon l'une quelconque des revendications précédentes, dans lequel le dispositif d'actionnement (12) est commandé hydrauliquement.

10. Véhicule automobile (28) présentant une unité d'entraînement (29) avec un arbre de prise de force (38), une chaîne cinématique (37) et un agencement (1) d'un double embrayage selon l'une quelconque des revendications précédentes, l'agencement (1) reliant de manière séparable l'arbre de prise de force (38) à la chaîne cinématique (37) et l'unité d'entraînement (29) étant orientée notamment dans le véhicule (28) avant la cabine de conducteur (30) et transversalement à l'axe longitudinal (31) du véhicule automobile (28).
